# EUROPÄISCHE PATENTANMELDUNG

(11) **EP 1 455 180 A1**
(43) Veröffentlichungstag der Anmeldung: **08.09.2004**
(21) Anmeldenummer: 03004758.3
(22) Anmeldetag: 04.03.2003
(51) Int. Cl.: G01N 25/72, G01N 22/00

(54) **Verfahren und Anordnung zur thermografischen Werkstoffprüfung an Kunstoff-Schiffskörpern bzw. -Bootskörpern**

(71) Anmelder: Hofmann, Silvia, 07973 Greiz (DE); Steinbach, Steffen, 09648 Altmittweida (DE)
(72) Erfinder: Steinbach, Steffen, 09648 Altmittweida (DE); Hofmann, Silvia, 07973 Greiz (DE); Schumacher, Günther, 28207 Bremen (DE)
(74) Vertreter: Horn, Klaus, Dr.

(57) **Zusammenfassung**

Die vorliegende Erfindung betrifft das Diagnostizieren von Wasser- und Wasserdampfeinschlüssen in Kunststoff-Schiffs- bzw. -Bootskörpern (1), insbesondere in glasfaserverstärkten Kunststoff-Schiffs- bzw. -Bootskörpern (1).

Der Erfindung liegt die Aufgabe zu Grunde, eine Verfahrensweise und eine Geräteanordnung bereitzustellen, welche es ermöglichen, zerstörungsfrei Schiffs- bzw. Bootskörper bzw. deren Wände (1) auf Feuchtigkeitseinschlüsse zu untersuchen und befallene Bereiche zu identifizieren und zu lokalisieren.

Erfindungsgemäß wird dies dadurch erreicht, dass die Schiffs- bzw. Bootswand (1) bzw. Aufbauten mittels geeigneter Mikrowellenantennen (3) mit Mikrowellen bestrahlt werden. Die Schiffs- bzw. Bootswandflächen (1) werden wärmebildlich mittels einer Infrarotkamera (5) erfasst und dokumentiert. Damit werden die gesuchten Bootskörperbereiche, in denen es zu Wassereinschlüssen kam, lokalisiert.

## Beschreibung

Die vorliegende Erfindung gehört einerseits zum technischen Gebiet des Schiffs- bzw. Bootsbaus andererseits zum technischen Gebiet des zerstörungsfreien Untersuchens und Analysierens von Stoffen auf Vorhandensein von Wasser bzw. Wasserdampf in ihrem Innern, insofern zur Diagnostizierung von Wasser- und Wasserdampfeinschlüssen in Kunststoffen, insbesondere in glasfaserverstärkten Kunststoff-Schiffs- bzw. -Bootskörpern.

Zerstörungsfreie Prüfungen bzw. Diagnostizierungen von Schiffs- bzw. Bootskörpern bzw. -wänden, die aus Kunststoffen, vorzugsweise aus glasfaserverstärkten Polyesterharzkunststoffen bestehen, hinsichtlich des Vorhandenseins von Wasser- oder Wasserdampfeinschlüssen in Folge von osmotischen Prozessen beim bestimmungsgemäßen Einsatz der schwimmenden Wasserfahrzeuge durch den ununterbrochenen Wasserkontakt des Schiffskörpers, landläufig auch als "Schadbild "Osmose" bezeichnet, sind bisher nicht bekannt. Offenbarungen hierzu konnten im einschlägigen Schriftentum nicht nachgewiesen werden.
Bisherige Diagnoseverfahren beschränken sich auf Sichtprüfungen der Oberfläche, indem der Schiffs- bzw. Bootskörper an seiner Außenhaut visuell nach Bläschenbildungen abgesucht wird. Auch sind Prüfungen derart, dass Teile aus von vermutlich mit "Osmose" befallenen Bereichen der Schiffskörper entnommen werden und diese dann auf Vorhandensein von Wasser herkömmlich untersucht werden, gebräuchlich. Weiterhin wird versucht, durch Bohrungen oder zerstörungsfrei Feuchteprofile im Schiffs- bzw. Bootskörper bzw. in der Schiffs- bzw. Bootswandung festzustellen und so Rückschlüsse auf das Schadbild "Osmose" im Schiffs-/Bootskörper zu ziehen. Durch Untersuchungen mit Ultraschall wird gebräuchlicherweise festgestellt, ob und in wie fern sich einzelne Laminatschichten voneinander gelöst haben.

Abgesehen davon, dass bei der überwiegenden Anzahl der v.g. Prüfungen eine Zerstörung am Bootskörper stattfindet, die wieder aufwändig zu reparieren ist, kann bei letzter Prüfmethodik nur der ernsthafteste Schaden festgestellt werden.
Bei der bisher nur möglichen zerstörungsfreien Prüfmethodik durch die derzeitig übliche Sichtprüfung bzw. Feuchteprofilmessung bleibt ein sehr hohes Risiko bestehen, dass durch "Osmose" befallene Bereiche einfach nicht erkannt werden und damit eine Schädigung des Bootes folglich auch nicht in eine Bewertung, insbesondere beim Eigentümerwechsel, einbezogen werden kann. Große wirtschaftliche Risiken, gegebenenfalls Schäden, sind u.U. die Folge, was bei der hohen Werthaltigkeit solcher Produkte von besonderer Bedeutung ist.
Es ist von außerordentlicher wirtschaftlicher Bedeutung, zu wissen, welchen wahren Wert ein Boot, eine Yacht, ein Schiff, insbesondere mit dem aktuellen Kunststoffkörper tatsächlich zu einem bestimmten Zeitpunkt hat.

Vom vorgenannten ausgehend, liegt der Erfindung die Aufgabe zu Grunde, eine Verfahrensweise und eine Geräteanordnung bereitzustellen, welche es ermöglichen, zerstörungsfrei Schiffs- bzw. Bootskörper bzw. deren Wände auf Feuchtigkeitseinschlüsse zu untersuchen und befallene Bereiche zu identifizieren und zu lokalisieren sowie qualitativ und quantitativ näher zu bestimmen. Die Erfindung soll damit in der Lage sein, den Grad der Schädigung des Schiffskörpers hinreichend zu bestimmen, somit eine Bewertung dieses Objektbereiches zu ermöglichen. Im besonderen wirtschaftlichen Interesse eines Verkäufers liegt der wahre Wert solch eines Wertobjektes. Gleiches gilt für den Erwerber, der aber insbesondere das Risiko versteckter Schädigungen und damit unerkannter starker Wertverluste verhindern möchte.

Erfindungsgemäß wird diese Aufgaben- und Zielstellung durch die kennzeichnenden Teile der unabhängigen Ansprüche 1 und 4 gelöst.

Weitere vorteilhafte Merkmale und besonders vorteilhafte Ausführungsformen ergeben sich aus den jeweils zugehörigen abhängigen Ansprüchen.
Der Erfindung dient die nicht neue Erkenntnis, dass Wassermoleküle durch ihren Dipolcharakter auf Mikrowellen reagieren und es dadurch bei deren Vorhandensein, gleich ob als Wasserdampf oder als Flüssigkeit, zu Temperaturerhöhungen kommt. Dieser Mittel-Wirkungs-Zusammenhang ist zwar bekannt und wird zur Trocknung von Stoffen, in diesem Falle durch die Wirkungskette "Erwärmung-Verdampfung-Dampfabführung/-verflüchtigung" der wässrigen Bestandteilen, ausgenutzt aber überraschenderweise hat die Fachwelt bisher noch nicht erkannt, dass diese Temperaturerhöhung von Wasser, hier Wasser- oder Wasserdampfeinschlüssen, im Rahmen eines zerstörungsfreien Prüf- bzw. Diagnoseverfahrens an Schiffs- bzw. Bootswänden aus Kunststoffen als Nachweis zu dessen Vorhandensein ausgenutzt werden kann. Wird doch mit dieser Erfindung gerade das und auch nur das einer Temperaturerhöhung unterzogen was dringend gesucht wird. Im übrigen bleibt ja das die Wasser-/Wasserdampfeinschlüsse umgebende Kompaktmaterial bei unveränderten Temperaturen, wodurch die wasserfreien und wasserhaltigen Bereiche genau lokalisierbar sind, wenn diese Bereiche über die Mikrowellenbehandlung hinaus mittels weiterer geeigneter Mittel erkennbar und dokumentierbar gemacht werden können. Sind Materialien in den Schiffs-/Bootskörper bzw. die -wand integriert, deren Erwärmungsverhalten unter Mikrowellenbestrahlung bekannt oder bestimmbar ist, lässt sich diese erfinderische technische Lösung gleichfalls anwenden, da hierbei Unterschiedsbetrachtungen im Teil der Erfindung, in dem mit der Infrarotthermografie gearbeitet wird, zum gewünschten Erfolg führen.
Entsprechend der vorgeschlagenen Erfindung werden zunächst alle Teile der Anordnung, insbesondere eine oder mehrere Mikrowellenantennen geeigneter Bauart, beispielsweise Hornstrahler, vorzugsweise jedoch als ebene Flachantennen, mit zugehörigem Mikrowellenerzeuger bzw. Magnetron, hier auch als Mikrowellengenerator bezeichnet, und eine oder mehrere Infrarotkameras genau positioniert und deren Folgepositionen apparativ sichergestellt. Durch die Auswahl bestimmter Flachantennen ist vorzugsweise eine weitestgehend homogene Verteilung der abgestrahlten Mikrowellen über die gesamte Fläche im Nahfeld bewirkt.
Verfahrensgemäß wird die festzulegende und zu untersuchende Gesamtfläche des Schiffs- bzw. Bootskörpers bzw. dessen Wand oder Aufbauten vom technischen Bedienpersonal in ein geeignetes Raster aufgeteilt. Der Schiffs-/Bootskörper bzw. die -wand oder Aufbauten werden an den festgelegten Rasterflächen rastermäßig mittels geeigneter Mikrowellenantennen mit Mikrowellen der innerhalb des ISM-Bandes zugelassenen Frequenzen bestrahlt, wobei die Mikrowellenleistung und Bestrahlungszeit entsprechend der Materialart und Materialdicke der Schiffs/Bootswand oder Aufbauten festgelegt werden. Die Rasterflächen werden wärmebildlich mittels einer oder mehrerer Infrarotkameras rastermäßig erfasst und dokumentiert. Damit werden die gesuchten Einschlüsse, in denen es zu Temperaturerhöhungen kommt, über das Gesamtraster durch Infrarotthermografie sichtbar gemacht und dokumentiert und können dann einer weiterführenden, hier nicht dargestellten Bewertung unterzogen werden.

An nachfolgendem Ausführungsbeispiel soll die Erfindung näher erläutert werden.

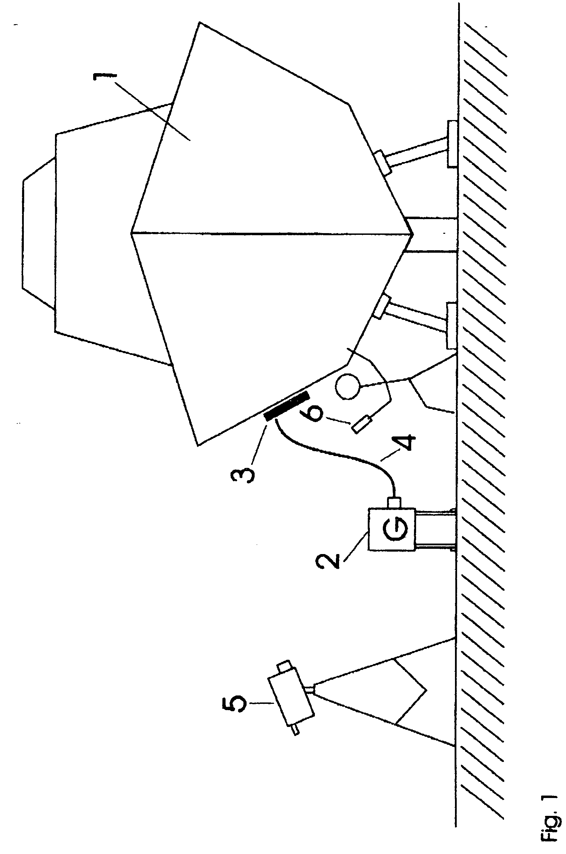

Die Figur 1 stellt die erfindungsgemäße Anordnung mit dem zu untersuchenden aufgedockten Bootskörper in Kunststoffbauweisel dar.

### Ausführungsbeispiel:

Vorab ist festzustellen, dass sich die erfindungsgemäße technische Lehre auch zur Lokalisierung von Feuchteeinschlüssen in Kunststoffkörpern mit Kern(en) aus Nichtmetall eignet.
An einer Yacht (Segelyacht/Motoryacht) ist u.a. eine Diagnostizierung deren Außenwand 1 durchzuführen. Die hauptsächlich im ständigen, gegebenenfalls im gelegentlichen Wasserkontakt stehenden Bereiche des Bootskörpers bzw. der Bootswand werden in ein geeignetes Raster eingeteilt, welches hauptsächlich von der zum Einsatz kommenden Mikrowellenantenne 3 abhängig ist. Eine Mikrowellenquelle, hier auch als Mikrowellengenerator (G) 2 bezeichnet, wird aufgebaut und positioniert, welche über ein Übertragungskabel 4 mit der am Rasteranfang positionierten Mikrowellenantenne 3 verbunden ist. Zur Erfassung Lokalisierung und Dokumentation der später gegebenenfalls erwärmten Bereiche an der Bootswand 1 wird eine Infrarotkamera 5 positioniert. Die Mikrowellenquelle 2 erzeugt die Mikrowellenenergie, die mittels v.g. Kabels 4 an eine oder mehrere Mikrowellenantennen 3, hier als Flachantenne dargestellt, weitergeleitet wird. Mittels Mikrowellenmessgerät 6 wird während der Betriebszeit des Mikrowellengenerators (G) 2 die Einhaltung des gesetzlich zugelassenen Grenzwertes für Mikrowellenbelastungen in der Umwelt überprüft und gesichert. Die Infrarotkamera 5 erfasst den jeweils vorgesehenen Rasterbereich und lokalisiert erwärmte Stellen an der Bootswand 1 , da dort Wassereinschlüsse sich infolge der Mikrowelleneinwirkung erwärmten und das umgebende Material seine ursprüngliche Temperatur auch bei Mikrowelleneinwirkung beibehielt.
Im Falle einer Kenntnis eines eventuellen Erwärmungsverhaltens des Bootswandmaterials oder von Teilen davon unter Mikrowelleneinwirkung ermöglicht dieses Diagnoseverfahren durch Differenzbewertung gleichfalls die Lokalisierung von Wassereinschlüssen und ist somit hervorragend zur Bewertung des Schadbildes "Osmose im Bootskörper aus Kunststoff" geeignet.
Als sehr vorteilhaft lässt sich diese Erfindung auch zum Diagnostizieren von Kunststoffwänden von Wassertanks, insbesondere Polyesterwassertanks, einsetzen, da auch die Innenseiten der Wassertankwände "osmosegefährdet" sind.
Diese erfinderische Lehre lässt sich natürlich auch weiterhin vorteilhaft dort einsetzen, wo es infolge ständiger oder gelegentlicher Wasseranwesenheit bzw. Wasserkontakt an Kunststoff-, insbesondere Polyesterkunststoff-Flächen zum "Schadbild "Osmose" kommen kann.
Bei Kenntnis des Erwärmungsverhaltens anderer polarer Flüssigkeiten lassen sich solche osmotischen Zustandsveränderungen an anderen Körpern oder Materialien, bzw. bei Anwesenheit anderer polarer Flüssigkeiten als Prüf- und Diagnoseanordnung und -verfahren gleichfalls vorteilhaft einsetzen.

## Patentansprüche

1. Verfahren zur zerstörungsfreien Werkstoffprüfung an Kunststoff-Schiffs- bzw. -Bootskörpern zum qualitativen und quantitativen Nachweis von möglicherweise darin enthaltenen Wasser- und/oder Wasserdampfeinschlüssen,
**dadurch gekennzeichnet, dass**
die festzulegende und zu untersuchende Gesamtfläche des Schiffs- bzw. Bootskörpers (1), damit dessen Wand (1), ggf. die Aufbauten, in ein geeignetes Raster mit den entsprechenden Rasterflächen aufgeteilt wird,
diese festgelegten Rasterflächen danach rastermäßig schrittweise mittels einer geeigneter Mikrowellenantenne (3) mit Mikrowellen bestrahlt werden, wobei die Mikrowellenleistung und Bestrahlungszeit entsprechend der Materialart und Materialdicke der Schiffs-/Bootswand, der Aufbauten festgelegt werden,
dabei die einzelnen Rasterflächen wärmebildlich mittels einer Infrarotkameras (5) rastermäßig erfasst und dokumentiert werden,
damit die gesuchten Einschlüsse, in denen es zu Temperaturerhöhungen kommt, über das Gesamtraster durch Infrarotthermografie sichtbar gemacht und dokumentiert werden
und
danach einer weiterführenden Bewertung unterzogen werden.

2. Verfahren nach Anspruch 1,
**dadurch gekennzeichnet, dass**
verfahrensmäßig eine oder mehrere geeignete Mikrowellenantennen (3) zur Anwendung kommen.

3. Verfahren nach Anspruch 1,
**dadurch gekennzeichnet, dass**
verfahrensmäßig eine oder mehrere geeignete Infrarotkameras (5) zur Anwendung kommen.

4. Anordnung zur zerstörungsfreien Werkstoffprüfung an Kunststoff-Schiffs- bzw. -Bootskörpern zum qualitativen und quantitativen Nachweis von möglicherweise darin enthaltenen Wasser- und/oder Wasserdampfeinschlüssen,
**dadurch gekennzeichnet, dass**
ein Mikrowellenerzeuger/Magnetron/Generator (G) (2) mit einer mikrowellenausstrahlenden Antenne (3) energieleitend verbunden ist, welche den Bootskörper (1) mit Mikrowellen beaufschlagt und eine Infrarotkamera (5) zum Zwecke der Erfassung der vom Bootskörper (1) ausgehenden Infrarotstrahlung auf Grund vorhandener erwärmter Wassermoleküle angeordnet und auf diesen Bootskörper (1) gerichtet ist.

5. Anordnung nach Anspruch 4,
**dadurch gekennzeichnet, dass**
als Mikrowellenantenne (3) vorzugsweise eine Flachantenne (3) mit weitestgehend homogener Verteilung der abgestrahlten Mikrowellen über die gesamte Fläche im Nahfeld vorgesehen ist, wobei diese vermittels eines energieleitenden Übertragungskabels (4) mit dem Mikrowellenerzeuger/Magnetron/Generator (G) (2) verbunden ist.

6. Anordnung nach Anspruch 4,
**dadurch gekennzeichnet, dass**
dass ein oder mehrere Mikrowellenerzeuger/Magnetrone/Generatoren (G) (2) in der Anordnung enthalten sind.

7. Anordnung nach Anspruch 4,
**dadurch gekennzeichnet, dass**
ein oder mehrere Mikrowellenantennen (3) in der Anordnung enthalten sind.

8. Anordnung nach Anspruch 4,
**dadurch gekennzeichnet, dass**
ein oder mehrere Infrarotkameras (5)in der Anordnung enthalten sind.
